# EUROPÄISCHE PATENTSCHRIFT

(11) **EP 1 093 645 B1**
(45) Veröffentlichungstag und Bekanntmachung des Hinweises auf die Patenterteilung: **26.03.2003**
(21) Anmeldenummer: 99936268.4
(22) Anmeldetag: 18.05.1999
(51) Int. Cl.: G08B 26/00, G08B 29/14, G01D 21/00

(54) **BUS-BETREIBBARE SENSORVORRICHTUNG UND ENTSPRECHENDES PRÜFVERFAHREN**
BUS-OPERATIONAL SENSOR DEVICE AND CORRESPONDING TEST METHOD
DISPOSITIF DE DETECTION FONCTIONNANT AU MOYEN D'UN BUS ET PROCEDE DE CONTROLE CORRESPONDANT

(30) Priorität: 09.07.1998 DE 19830772
(43) Veröffentlichungstag der Anmeldung: 25.04.2001
(73) Patentinhaber: ROBERT BOSCH GMBH, 70442 Stuttgart (DE)
(72) Erfinder: HUEBSCH, Thomas, D-82041 Deisenhofen (DE)
(86) Internationale Anmeldenummer: DE9901487
(87) Internationale Veröffentlichungsnummer: WO00003368

(56) Entgegenhaltungen:
- EP-A- 0 093 872
- GB-A- 2 137 790

## Beschreibung

### STAND DER TECHNIK

Die vorliegende Erfindung betrifft eine Bus-betreibbare Sensorvorrichtung mit einem ersten und einem zweiten Buseingang zur Verbindung mit einer entsprechenden ersten und zweiten Busleitung, welche im Bus-Normalbetrieb ein entsprechendes erstes und zweites Potential aufweisen; einer Steuereinrichtung, welche mit dem ersten und zweiten Buseingang verbunden ist; einem Sensorkontakt mit mindestens zwei verschiedenen Kontaktzuständen, welcher an seinem ersten Anschluß mit dem ersten Buseingang verbunden ist; und einer Sensorkontakt-Zustandserfassungseinrichtung, welche mit dem zweiten Anschluß des Sensorkontakts und der Steuereinrichtung verbunden ist, zum Erfassen des Kontaktzustands des Sensorkontakts und zum Übermitteln desselben an die Steuereinrichtung; wobei die Steuereinrichtung derart gestaltet ist, daß sie ansprechend auf einen bestimmten übermittelten Kontaktzustand eine vorbestimmte Steuerfunktion auslöst. Ebenfalls betrifft die Erfindung ein entsprechendes Prüfverfahren.

Obwohl auf beliebige Bus-betreibbare Sensorvorrichtungen anwendbar, werden die vorliegende Erfindung sowie die ihr zugrundeliegende Problematik in bezug auf eine an einem Feldbus bzw. Sensor/Aktorbus betreibare Sensorvorrichtung mit einem Reedschalter erläutert.

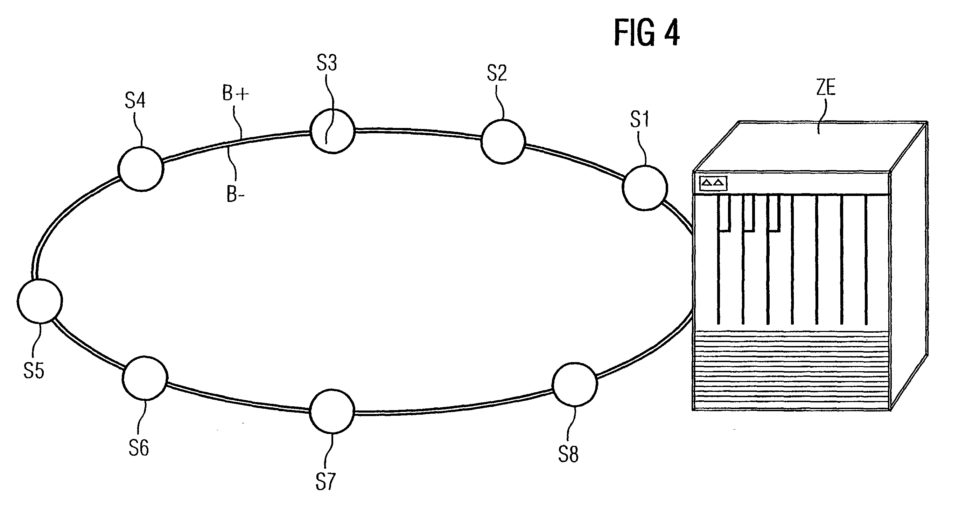

Fig. 4 ist ein schematisches Schaltungsdiagramm einer üblichen Anordnung einer Mehrzahl von ringförmig an einem Feldbus bzw. Sensor/Aktorbus betriebenen bekannten Sensorvorrichtungen.

In Fig. 4 bezeichnen S1 bis S8 Sensorvorrichtungen, B⁺ und B⁻ eine erste positive bzw. zweite negative, durch die Sensorvorrichtungen S1 bis S8 durchgeschleifte Busleitung und ZE eine Zentraleinheit bzw. einen Zentralrechner.

Die Sensorvorrichtungen S1 bis S8 dienen verschiedenen oder gleichen Überwachungszwecken, z.B. Glasbruchmelder, Feuermelder, Hagelmelder, Schließmelder, usw. Sie enthalten jeweils einen Sensorkontakt, welcher mindestens zwei verschiedene Kontaktzustände aufweist, welche durch die zu überwachende Größe beeinflußbar sind. Ansprechend auf einen bestimmten Kontaktzustand kann eine in der jeweiligen Sensorvorrichtung vorgesehene Steuereinrichtung einen Alarm über den Bus an den Zentralrechner senden, von wo aus dann weitere Maßnahmen veranlaßt werden.

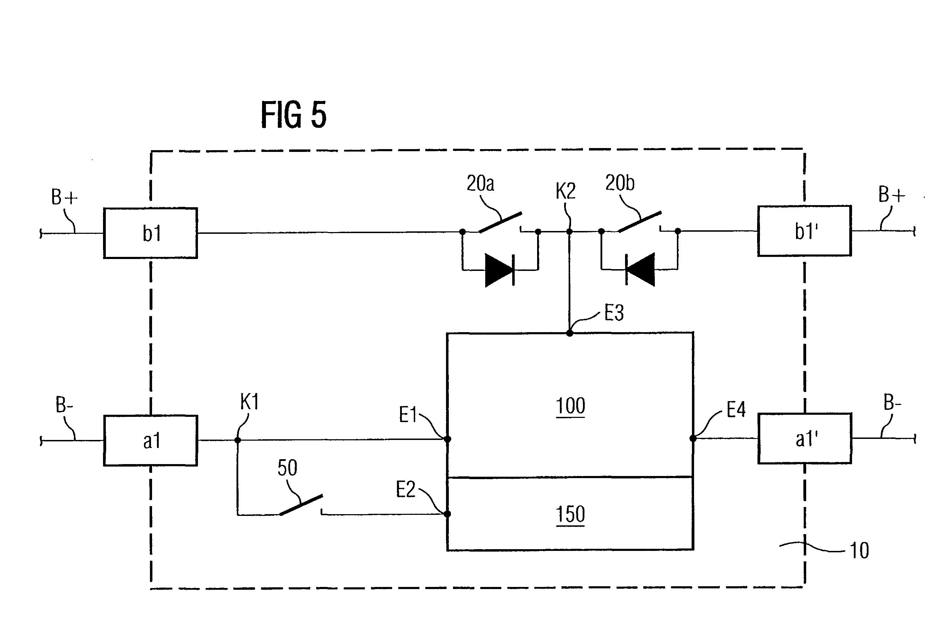

Fig. 5 ist ein schematisches Schaltungsdiagramm einer bekannten Bus-betreibbaren Sensorvorrichtung.

In Fig. 5 bezeichnen zusätzlich zu den bereits eingeführten Bezugszeichen 10 eine Sensorvorrichtung, 50 einen Sensorkontakt, 100 eine Steuereinrichtung, 150 eine Sensorkontakt-Zustandserfassungseinrichtung, b1 einen Buseingang für B⁺, b1' einen Busausgang für B⁺, a1 einen Buseingang für B⁻, a1' einen Busausgang für B⁻, K1 und K2 Knoten, 20a und 20b eine Adressierungseinrichtung mit einer jeweiligen Parallelschaltung eines Schalters mit einer Diode und E1 - E4 Ports von 100 bzw. 150.

Der Betrieb der so aufgebauten Sensorvorrichtung ist folgender.

Der erste und zweite Buseingang a1, b1 sind mit der entsprechenden ersten und zweiten Busleitung B⁻, B⁺ verbunden, welche im Bus-Normalbetrieb ein entsprechendes erstes und zweites Potential aufweisen, hier beispielsweise die Busleitung B⁻ ein negatives Potential und die Busleitung B⁺ ein positives Potential.

Bei der Auslösung des Sensorkontaktes 50, der hier als Reedschalter ausgebildet ist, durch ein Magnetfeld, wird das negative Potential der Busleitung B⁻ an den Port E2 der Sensorkontakt-Zustandserfassungseinrichtung 150 geführt, welche mit dem zweiten Anschluß des Sensorkontakts 50 und der Steuereinrichtung 100 verbunden ist. Die Sensorkontakt-Zustandserfassungseinrichtung 150 dient zum Erfassen des Kontaktzustands des Sensorkontakts 50 und zum Übermitteln desselben an die Steuereinrichtung 100. Die Steuereinrichtung 100 ist derart gestaltet, daß sie ansprechend auf einen bestimmten übermittelten Kontaktzustand - z.B. ein Schließen eines normalerweise offenen Schalters - eine vorbestimmte Steuerfunktion auslöst. Hier besteht diese Steuerfunktion darin, daß sie ansprechend auf einen bestimmten übermittelten Kontaktzustand eine Botschaft über den Bus, d.h. über die Busausgänge a1', b1' an den Zentralrechner ZE sendet, welcher daraufhin beispielsweise einen Alarm auslöst.

Die Adressierungseinrichtung 20a und 20b mit der jeweiligen Parallelschaltung eines Schalters mit einer Diode links und rechts des Knotens K2 wird zur Adressierung der Sensoreinrichtung 10 benötigt, weil es sich bei dem gezeigten Feldbus um ein Daisy-Chain-System mit automatischer Adressierung handelt.

Allgemein neigen Sensorkontakte, insbesondere solche mit mechanischen Komponenten zum Verschleiß. Daher ist es erforderlich, über einen Bus verbundene Netzwerk-Komponenten in Form derartiger Sensorvorrichtungen S1 bis S8 auf Ihre korrekte Funktion zu überprüfen, z.B. das Öffnen und Schließen des Reedschalters.

Da jedoch die Sensorvorrichtung eine abgeschlossene, d.h. üblicherweise vergossene Einheit bildet, welche nur über die Buseingänge a1, b1 bzw. Busausgänge a1', b1' von außen zugänglich ist, ist eine Fehlerdiagnose des Sensorkontaktes für die Installations- oder Wartungsmitarbeiter immer aufwendiger. Dabei kann insbesondere nicht von außen auf den Port E2 zugegriffen, um die Funktion des Sensorkontakts 50 zu prüfen.

Momentan werden dazu spezielle aufwendige und teure Prüfgeräte verwendet, welche je nach Bus-Technik variieren. Diese speziellen Prüfgeräte sind nur noch für diese spezielle Prüffunktion verwendbar.

Als nachteilhaft bei dem obigen bekannten Ansatz hat sich die Tatsache herausgestellt, dass er einen hohen Kosten- und Bedienungsaufwand erfordert.

In EP-A-093872 wird ein Verfahren zur Übertragung von Messwerten in einem Überwachungssystem offenbart, wobei ein bilaterales Schaltelement in einer Messeinrichtung in Abhängigkeit von einer Kontrolleinheit geschaltet wird, also ob ein Notfall vorliegt oder nicht. Die Messeinrichtungen sind mit einer Zentrale verbunden, wobei die Messeinrichtungen in einer Kettenschaltung verbunden sein können. In GB-A-2137790 ist ein Einbruchsalarmsystem offenbart, wobei eine Anzeige bei einer Prüfung eines Sensorschalters in Abhängigkeit von dem Zustand des Sensorschalters leuchtet. Es ist also ein Ein- und Austest möglich. Die Prüfung geschieht bei umgekehrter Polarität. Es wird weiterhin eine Parallelschaltung oder Reihenschaltung von Sensorschaltern angegeben.

### VORTEILE DER ERFINDUNG

Die erfindungsgemäße Bus-betreibbare Sensorvorrichtung mit den Merkmalen des Anspruchs 1 und das entsprechende Prüfverfahren gemäß Anspruch 9 weisen gegenüber dem bekannten Lösungsansatz den Vorteil auf, dass die eine einfache externe Prüfmöglichkeit bieten, ohne einen manuellen Eingriff eines Benutzers in die Sensorvorrichtung selbst zu erfordern und ohne ein spezielles kostspieliges Prüfgerät zu erfordern. Ein einfaches handelsübliches Multimeter reicht also zur Prüfung vollkommen aus.

Die der vorliegenden Erfindung zugrundeliegende Idee besteht darin, dass ein Schaltungselement mit richtungsabhängiger Strom/Spannungs-Charakteristik vorgesehen ist, welches derart zwischen den zweiten Anschluß des Sensorkontakts und den zweiten Buseingang geschaltet ist, daß es den Bus-Normalbetrieb unabhängig vom Kontaktzustand des Sensorkontakts im wesentlichen nicht beeinflußt.

Mit anderen Worten wirkt das Schaltungselement mit richtungsabhängiger Strom/ Spannungs-Charakteristik zweckmäßigerweise im Bus-Normalbetrieb entsprechend einer ersten Polarität wie ein hochohmiger Widerstand und dient im Prüfbetrieb entsprechend einer zweiten Polarität, in dem die Sensorvorrichtung vom Bus abgekoppelt ist, als niederohmiger Widerstand.

In den abhängigen Ansprüchen finden sich vorteilhafte Weiterbildungen und Verbesserungen der in Anspruch 1 angegebenen Bus-betreibbaren Sensorvorrichtung.

Gemäß einer bevorzugten Weiterbildung ist das Schaltungselement mit richtungsabhängiger Strom/ Spannungs-Charakteristik derart geschaltet ist, daß in einem Prüfbetrieb, in dem der erste und zweite Buseingang mit einem dritten und vierten Potential, welche eine Potentialdifferenz anderen Vorzeichens als das erste und zweite Potential aufweisen, verbunden sind, eine vom Kontaktzustand des Sensorkontakts abhängige Strom/ Spannungs-Charakteristik an dem ersten und zweiten Buseingang erfaßbar ist.

Gemäß einer weiteren bevorzugten Weiterbildung ist das Schaltungselement mit richtungsabhängiger Strom/ Spannungs-Charakteristik eine erste Diodeneinrichtung, welche mit ihrem positiven Anschluß mit dem zweiten Anschluß des Sensorkontakts und mit ihrem negativen Anschluß mit dem zweiten Buseingang verbunden ist, wobei das erste Potential kleiner als das zweite Potential ist. So läßt sich das Schaltungselement mit richtungsabhängiger Strom/ Spannungs-Charakteristik leicht durch ein passives Schaltungselement realisieren.

Gemäß einer weiteren bevorzugten Weiterbildung weist die Steuereinrichtung eine zweite Diodeneinrichtung, insbesondere als EMV-Schutzeinrichtung, auf, welche in einem Kontaktzustand des Sensorkontakts parallel zu der ersten Diodeneinrichtung geschaltet ist. Dabei ist die Schwellspannung der ersten Diodeneinrichtung kleiner als die Schwellspanung der zweiten Diodeneinrichtung.

Gemäß einer weiteren bevorzugten Weiterbildung ist die Steuereinrichtung derart gestaltet, daß sie ansprechend auf einen bestimmten übermittelten Kontaktzustand eine Botschaft über den Bus sendet.

Gemäß einer weiteren bevorzugten Weiterbildung sind ein erster und ein zweiter Busausgang, die mit der Steuereinrichtung verbunden sind, zur Verbindung mit einer weiteren ersten und zweiten Busleitung vorgesehen.

Gemäß einer weiteren bevorzugten Weiterbildung ist der Sensorkontakt ein Schalterelement, insbesondere ein Reedschalter, Thermoschalter, Induktionsschalter, Optoschalter.

Gemäß einer weiteren bevorzugten Weiterbildung ist eine zwischen dem zweiten Buseingang und dem zweiten Busausgang liegende Adressierungeinrichtung vorgesehen. So lassen sich die Sensorvorrichtungen mit eindeutigen Adressen bzw. Identifizierern zu versehen, um gezielt Botschaften mit eindeutiger Zuordnung zwischen denselben und dem Zentralrechner übermitteln zu können.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein schematisches Schaltungsdiagramm als erstes Ausführungsbeispiel der Bus-betreibbaren Sensorvorrichtung nach der vorliegenden Erfindung;
- Fig. 2: ein schematisches Schaltungsdiagramm als zweites Ausführungsbeispiel der Bus-betreibbaren Sensorvorrichtung nach der vorliegenden Erfindung;
- Fig. 3: ein schematisches Schaltungsdiagramm als drittes Ausführungsbeispiel der Bus-betreibbaren Sensorvorrichtung nach der vorliegenden Erfindung;
- Fig. 4: ein schematisches Schaltungsdiagramm einer üblichen Anordnung einer Mehrzahl von an einem Feldbus bzw. Sensor/Aktorbus betriebenen bekannten Sensorvorrichtungen; und
- Fig. 5: ein schematisches Schaltungsdiagramm einer bekannten Bus-betreibbaren Sensorvorrichtung.

### BESCHREIBUNG DER AUSFÜHRUNGSBEISPIELE

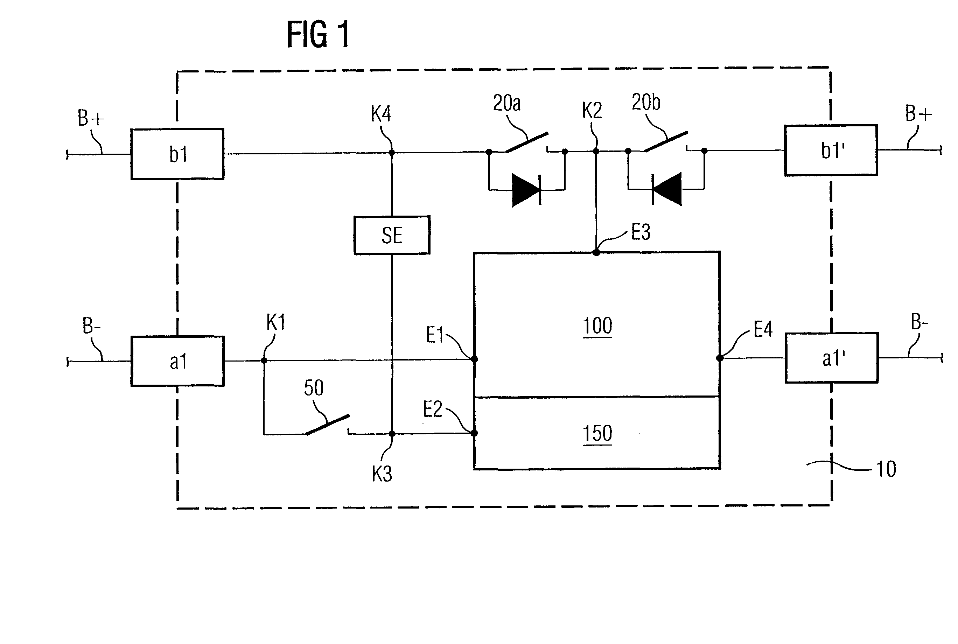

Fig. 1 ist ein schematisches Schaltungsdiagramm als erstes Ausführungsbeispiel der Bus-betreibbaren Sensorvorrichtung nach der vorliegenden Erfindung.

In Fig. 1 bezeichnen zusätzlich zu den bereits eingeführten Bezugszeichen SE ein Schaltungselement mit richtungsabhängiger Strom/ Spannungs-Charakteristik, das zwischen die Knoten K3 und K4 geschaltet ist, wobei der Knoten K3 zwischen dem Sensorkontakt 50 und der Sensorkontakt-Zustandserfassungseinrichtung 150 liegt und der Knoten K4 zwischen dem zweiten Buseingang b1 und der Schalter/ Diodenkombination 20a.

Das Schaltungselement SE mit richtungsabhängiger Strom/Spannungs-Charakteristik ist derart ausgelegt und zwischen den zweiten Anschluß des Sensorkontakts 50 und den zweiten Buseingang b1 geschaltet, daß es den Bus-Normalbetrieb unabhängig vom Kontaktzustand des Sensorkontakts 50 im wesentlichen nicht beeinflußt. Dies schafft eine einfache Prüfmöglichkeit für den Sensorkontakt.

Bei diesem ersten Ausführungsbeispiel sei angenommen, daß das Schaltungselement SE mit richtungsabhängiger Strom/Spannungs-Charakteristik ist derart ausgelegt ist, daß es bei einer anliegenden Spannung abhängig von der Polarität in einer Richtung einen sehr hohen elektrischen Widerstand aufweist und in der anderen Richtung einen sehr niedrigen elektrischen Widerstand aufweist. Verschaltet ist es derart, daß im Bus-Normalbetrieb ein Stromfluß von K4 nach K3 im wesentlichen verhindert ist, wobei das Potential am Knoten K3 bei offenem Schalter niedriger als das zweite Potential auf der Busleitung B⁺ ist.

Nachstehend wird das Prüfverfahren zum Prüfen des Sensorkontakts 50 der Bus-betreibbaren Sensorvorrichtung 10 näher erläutert.

Zunächst erfolgt ein Abkoppeln der Sensorvorrichtung 10 von dem Bus B⁺, B⁻, und zwar sowohl eingangs- als auch ausgangsseitig.

Dann erfolgt ein Messen der Strom/Spannungs-Charakteristik am ersten und zweiten Buseingang a1, b1 im Prüfbetrieb, in dem der erste und zweite Buseingang a1, b1 mit einem dritten und vierten Potential, welche eine Potentialdifferenz anderen Vorzeichens als das erste und zweite Potential aufweisen, verbunden sind, in den verschiedenen Kontaktzuständen des Sensorkontakts 50, d.h. offen und geschlossen, unter Verwendung eines Multimeters.

Das Beurteilen der Qualität des Sensorkontakts 50 anhand des Meßergebnisses gestaltet sich folgendermaßen.

Bei richtig funktionierendem Sensorkontakt 50 ergibt sich eine Stromänderung bei bestimmter anliegender Prüfspannnung, da beim Schließen des Sensorkontakts eine niederohmige Verbindung zwischen den Buseingängen a1, b1 einstellbar ist. Tritt andererseits keine Stromänderung auf, so ist der Sensorkontakt 50 defekt, denn er bleibt entweder offen oder geschlossen.

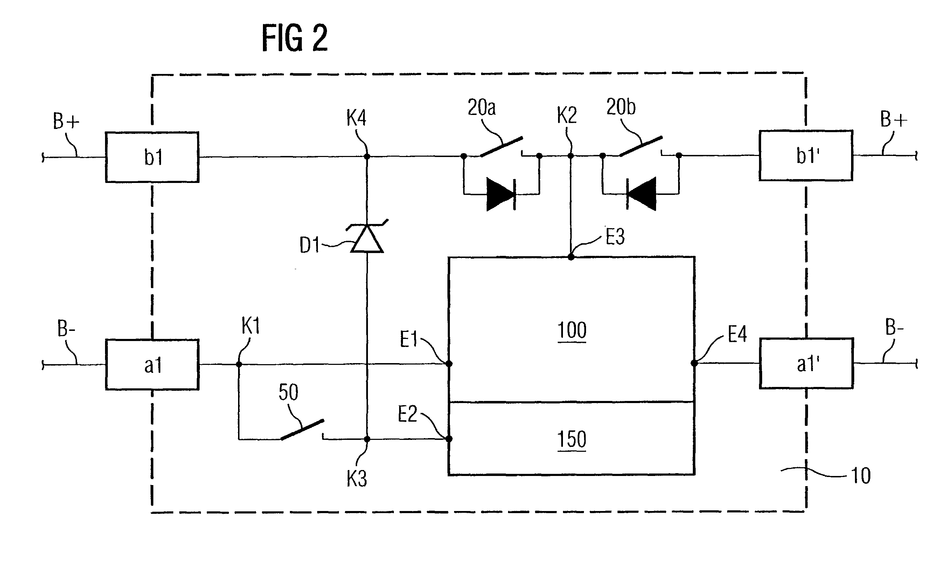

Fig. 2 ist ein schematisches Schaltungsdiagramm als zweites Ausführungsbeispiel der Bus-betreibbaren Sensorvorrichtung nach der vorliegenden Erfindung.

Bei diesem zweiten Ausführungsbeispiel bezeichnet D1 das Schaltungselement mit richtungsabhängiger Strom/ Spannungs-Charakteristik in Form einer ersten Diodeneinrichtung, welche mit ihrem positiven Anschluß über den Knoten K3 mit dem zweiten Anschluß des Sensorkontakts 50 und mit ihrem negativen Anschluß über den Knoten K4 mit dem zweiten Buseingang b1 verbunden ist.

Da das erste Potential kleiner als das zweite Potential ist, ist die Diodeneinrichtung im Bus-Normalbetrieb in Sperrichtung geschaltet und sie beeinflußt den Bus-Normalbetrieb daher unabhängig vom Kontaktzustand des Sensorkontakts 50 im wesentlichen nicht (d.h. bis auf einen geringen Sperrstrom).

Das Prüfverfahren erfolgt analog wie beim ersten Ausführungsbeispiel beschrieben.

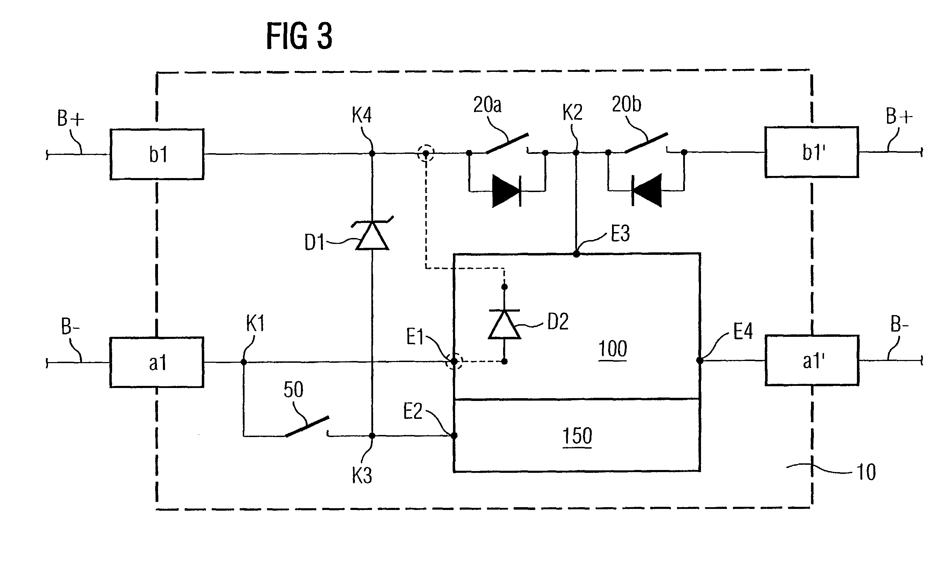

Fig. 3 ist ein schematisches Schaltungsdiagramm als drittes Ausführungsbeispiel der Bus-betreibbaren Sensorvorrichtung nach der vorliegenden Erfindung.

In Fig. 3 bezeichnet D2 eine in der Steuereinrichtung 100 enthaltene zweite Diodeneinrichtung, die als EMV-Schutzeinrichtung dient und welche im geschlossen Kontaktzustand des Sensorkontakts 50 parallel zu der ersten Diodeneinrichtung D1 geschaltet ist.

Die Schwellspannung der ersten Diodeneinrichtung D1 ist hier kleiner gewählt als die Schwellspanung der zweiten Diodeneinrichtung D2. Somit hat die zweite Diodeneinrichtung D2 bei geeigneter Wahl der Prüfspannung keinen Einfluß auf das oben erwähnte Prüfverfahren.

Obwohl die vorliegende Erfindung anhand eines bevorzugten Ausführungsbeispiels vorstehend beschrieben wurde, ist sie darauf nicht beschränkt, sondern auf vielfältige Weise modifizierbar innerhalb des Umfangs der folgenden Ansprüche.

Als das Schaltungselement mit richtungsabhängiger Strom/Spannungs-Charakteristik kann selbstverständlich nicht nur ein Einzelbautel, sondern auch eine Bauteilkombination verwendet werden.

Auch ist die Auswahl der Polaritäten willkürlich und umkehrbar. Weiterhin ist die Erfindung nicht auf den speziell beschriebenen Bustyp beschränkt, sondern kann auch für andere Bustypen und -konfigurationen verwendet werden.

Schließlich können nicht nur EIN/AUS- bzw. AUS/EIN-Sensorkontakte, sondern auch Sensorkontakte mit mehr als zwei Kontaktzuständen verwendet werden.

## Patentansprüche

1. Bus-betreibbare Sensorvorrichtung (10) mit:
einem ersten und einem zweiten Buseingang (a1, b1) zur Verbindung mit einer entsprechenden ersten und zweiten Busleitung (B⁻, B⁺), welche im Bus-Normalbetrieb ein entsprechendes erstes und zweites Potential aufweisen;
einer Steuereinrichtung (100), welche mit dem ersten und zweiten Buseingang (a1, b1) verbunden ist;
einem Sensorkontakt (50) mit mindestens zwei verschiedenen Kontaktzuständen, welcher an seinem ersten Anschluß mit dem ersten Buseingang (a1) verbunden ist; und
einer Sensorkontakt-Zustandserfassungseinrichtung (150), welche mit dem zweiten Anschluß des Sensorkontakts (50) und der Steuereinrichtung (100) verbunden ist, zum Erfassen des Kontaktzustands des Sensorkontakts (50) und zum Übermitteln desselben an die Steuereinrichtung (100);
wobei die Steuereinrichtung (100) derart gestaltet ist, daß sie ansprechend auf einen bestimmten übermittelten Kontaktzustand eine vorbestimmte Steuerfunktion auslöst;
**gekennzeichnet durch**
ein Schaltungselement mit richtungsabhängiger Strom/ Spannungs-Charakteristik (SE; D1), welches derart ausgelegt und zwischen den zweiten Anschluß des Sensorkontakts (50) und den zweiten Buseingang (b1) geschaltet ist, daß es den Bus-Normalbetrieb unabhängig vom Kontaktzustand des Sensorkontakts (50) im wesentlichen nicht beeinflußt.

2. Bus-betreibbare Sensorvorrichtung (10) nach Anspruch 1, **dadurch gekennzeichnet, daß** das Schaltungselement mit richtungsabhängiger Strom/ Spannungs-Charakteristik (SE; D1) derart geschaltet ist, daß in einem Prüfbetrieb, in dem der erste und zweite Buseingang (a1, b1) mit einem dritten und vierten Potential, welche eine Potentialdifferenz anderen Vorzeichens als das erste und zweite Potential aufweisen, verbunden sind, eine vom Kontaktzustand des Sensorkontakts (50) abhängige Strom/ Spannungs-charakteristik an dem ersten und zweiten Buseingang (a1, b1) erfaßbar ist.

3. Bus-betreibbare Sensorvorrichtung (10) nach Anspruch 1 oder 2, **dadurch gekennzeichnet, daß** das Schaltungselement mit richtungsabhängiger Strom/ Spannungs-Charakteristik (SE; D1) eine erste Diodeneinrichtung (D1) ist, welche mit ihrem positiven Anschluß mit dem zweiten Anschluß des Sensorkontakts (50) und mit ihrem negativen Anschluß mit dem zweiten Buseingang (b1) verbunden ist, wobei das erste Potential kleiner als das zweite Potential ist.

4. Bus-betreibbare Sensorvorrichtung (10) nach Anspruch 3, **dadurch gekennzeichnet, daß** die Steuereinrichtung (100) eine zweite Diodeneinrichtung (D2), insbesondere als EMV-Schutzeinrichtung, aufweist, welche in einem Kontaktzustand des Sensorkontakts (50) parallel zu der ersten Diodeneinrichtung (D1) geschaltet ist, und daß die Schwellspannung der ersten Diodeneinrichtung (D1) kleiner als die Schwellspanung der zweiten Diodeneinrichtung (D2) ist.

5. Bus-betreibbare Sensorvorrichtung (10) nach einem der vorhergehenden Ansprüche, **dadurch gekennzeichnet, daß** die Steuereinrichtung (100) derart gestaltet ist, daß sie ansprechend auf einen bestimmten übermittelten Kontaktzustand eine Botschaft über den Bus sendet.

6. Bus-betreibbare Sensorvorrichtung (10) nach einem der vorhergehenden Ansprüche, **dadurch gekennzeichnet, daß** ein erster und ein zweiter Busausgang (a1', b1'), die mit der Steuereinrichtung (100) verbunden sind, zur Verbindung mit einer weiteren ersten und zweiten Busleitung (B⁻, B⁺) vorgesehen sind.

7. Bus-betreibbare Sensorvorrichtung (10) nach einem der vorhergehenden Ansprüche, **dadurch gekennzeichnet, daß** der Sensorkontakt (50) ein Schalterelement, insbesondere ein Reedschalter, Thermoschalter, Induktionsschalter, Optoschalter, ist.

8. Bus-betreibbare Sensorvorrichtung (10) nach Anspruch 6 oder 7, **dadurch gekennzeichnet, daß** eine zwischen dem zweiten Buseingang (b1) und dem zweiten Busausgang (b1') liegende Adressierungeinrichtung (20a; 20b) vorgesehen ist.

9. Prüfverfahren zum Prüfen des Sensorkontakts (50) einer Bus-betreibbaren Sensorvorrichtung (10) nach mindestens einem der vorhergehenden Ansprüche mit den Schritten:
Abkoppeln der Sensorvorrichtung (10) von dem Bus (B⁺, B⁻);
Messen der Strom/Spannungs-Charakteristik am ersten und zweiten Buseingang (a1, b1) im Prüfbetrieb, in dem der erste und zweite Buseingang (a1, b1) mit einem dritten und vierten Potential, welche eine Potentialdifferenz anderen Vorzeichens als das erste und zweite Potential aufweisen, verbunden sind, in den verschiedenen Kontaktzuständen des Sensorkontakts (50), insbesondere unter Verwendung eines Multimeters; und
Beurteilen der Qualität des Sensorkontakts (50) anhand des Meßergebnisses.

10. Prüfverfahren nach Anspruch 9, **dadurch gekennzeichnet, daß** der Sensorkontakt (50) zwei Kontaktzustände, offen und geschlossen, aufweist und bei diesen die Strom/Spannungs-Charakteristik am ersten und zweiten Buseingang (a1, b1) gemessen wird.

## Claims

1. Sensor apparatus (10) which can be operated from a bus, having:
a first and a second bus input (a1, b1) for connection to a corresponding first and second bus line (B⁻, B⁺) which, during normal bus operation are at a corresponding first and second potential;
a control device (100) which is connected to the first and second bus input (a1, b1);
a sensor contact (50) having at least two different contact states and whose first connection is connected to the first bus input (a1); and
a sensor contact state detection device (150), which is connected to the second connection of the sensor contact (50) and to the control device (100), in order to detect the contact state of the sensor contact (50) and in order to transmit this to the control device (100);
with the control device (100) being designed such that it initiates a predetermined control function in response to a specific transmitted contact state;
**characterized by**
a circuit element having a directionally dependent current/voltage characteristic (SE; D1) which is designed and is connected between the second connection of the sensor contact (50) and the second bus input (b1) such that it essentially does not influence normal bus operation, irrespective of the contact state of the sensor contact (50).

2. Sensor apparatus (10) which can be operated from a bus, according to Claim 1, **characterized in that** the circuit element having a directionally dependent current/voltage characteristic (SE; D1) is connected such that, in a test mode in which the first and second bus inputs (a1, b1) are connected to a third and a fourth potential, which have a potential difference with a different mathematical sign from the first and second potentials, a current/voltage characteristic which is dependent on the contact state of the sensor contact (50) can be detected at the first and second bus inputs (a1, b1).

3. Sensor apparatus (10) which can be operated from a bus, according to Claim 1 or 2, **characterized in that** the circuit element having a directionally dependent current/voltage characteristic (SE; D1) is a first diode device (D1) whose positive connection is connected to the second connection of the sensor contact (50), and whose negative connection is connected to the second bus input (b1), with the first potential being less than the second potential.

4. Sensor apparatus (10) which can be operated from a bus, according to Claim 3, **characterized in that** the control device (100) has a second diode device (D2), in particular as an EMC protection device, which is connected in parallel with the first diode device (D1) when the sensor contact (50) is in one contact state, and **in that** the threshold voltage of the first diode device (D1) is less than the threshold voltage of the second diode device (D2).

5. Sensor apparatus (10) which can be operated from a bus, according to one of the preceding claims, **characterized in that** the control device (100) is designed such that it sends a message via the bus in response to a specific transmitted contact state.

6. Sensor apparatus (10) which can be operated from a bus, according to one of the preceding claims, **characterized in that** a first and a second bus output (a1', b1'), which are connected to the control device (100), are provided for connection to a further first and second bus line (B⁻, B⁺).

7. Sensor apparatus (10) which can be operated from a bus, according to one of the preceding claims, **characterized in that** the sensor contact (50) is a switch element, in particular a reed switch, thermal switch, induction switch or optical switch.

8. Sensor apparatus (10) which can be operated from a bus, according to Claim 6 or 7, **characterized in that** an addressing device (20a; 20b) is provided, and is located between the second bus input (b1) and the second bus output (b1').

9. Test procedure for testing the sensor contact (50) of a sensor apparatus (10) which can be operated from a bus, according to at least one of the preceding claims, and comprising the following steps:
decoupling of the sensor apparatus (10) from the bus (B⁺, B⁻);
measurement of the current/voltage characteristic at the first and second bus inputs (a1, b1) in the test mode, in which the first and second bus inputs (a1, b1) are connected to a third and a fourth potential, which have a potential difference with a different mathematical sign from the first and second potential, in the various contact states of the sensor contact (50) in particular using a multimeter; and
assessment of the quality of the sensor contact (50) on the basis of the measurement result.

10. Test procedure according to Claim 9, **characterized in that** the sensor contact (50) has two contact states, open and closed, and the current/voltage characteristic at the first and second bus inputs (a1, b1) is measured in these contact states.

## Revendications

1. Dispositif de détection fonctionnant au moyen d'un bus (10) comprenant :
- une première et une seconde entrée de bus (a1, b1) reliées à une première et une seconde ligne de bus correspondante (B-, B+) qui sont à un premier et un second potentiel correspondant lorsque le bus est en mode de fonctionnement normal ;
- une installation de commande (100) reliée à la première et la seconde entrée de bus (a1, b1) ;
- un contact de détection (50) d'au moins deux états de contact reliés à un premier branchement à la première entrée de bus (a1) ; et
- une installation de saisie d'état de contact de détection (150) reliée au second branchement du contact de détection (50) et à l'installation de commande (100) pour saisir l'état du contact de détection (50) et transmettre cet état à l'installation de commande (100);
l'installation de commande (100) étant conçue pour qu'en fonction d'un état de contact déterminé, transmis elle déclenche une fonction de commande prédéterminée,
**caractérisé par**
un élément de commutation à caractéristique intensité/tension (SE ; DE) dépendant de la direction et qui est conçu et branché entre le second branchement du contact de détection (100) et la seconde entrée de bus (b1) pour ne pas influencer le mode de fonctionnement normal du bus indépendamment de l'état du contact de détection (50).

2. Dispositif de détection fonctionnant avec un bus (10) selon la revendication 1,
**caractérisé en ce que**
l'élément de commutation à caractéristique intensité/tension (SE ; D1) dépendant de la direction est branché de façon qu'en mode de contrôle, lorsque la première et la seconde entrée de bus (a1, b1) sont reliées au troisième et quatrième potentiel, donnant une différence de potentiel de signe algébrique différent du premier et du second potentiel, on saisit un état du contact de détection (50) dépendant de la caractéristique intensité/tension sur la première et la seconde entrée de bus (a1, b1).

3. Dispositif de détection fonctionnant avec un bus (10) selon la revendication 1 ou 2,
**caractérisé en ce que**
l'élément de commutation à caractéristique intensité/tension (SE ; D1) dépendant de la direction est une première installation à diode (D1) dont la borne positive est reliée au second branchement du contact de détection (50) et dont le branchement négatif est relié à la seconde entrée de bus (b1), le premier potentiel étant inférieur au second potentiel.

4. Dispositif de détection fonctionnant avec un bus (10) selon la revendication 3,
**caractérisé en ce que**
l'installation de commande (100) comporte une seconde installation à diode (D2) notamment une installation de protection (EMV), qui lorsque le contact de détection (50) est à l'état de contact, est branché en parallèle sur la première installation de diode (D1); et
la tension de seuil de la première installation à diode (D1) est inférieure à celle de la seconde installation à diode (D2).

5. Dispositif de détection fonctionnant avec un bus (10) selon l'une des revendications précédentes,
**caractérisé en ce que**
l'installation de commande (100) est branchée de façon à émettre un message par le bus en fonction d'un état de contact déterminé, transmis.

6. Dispositif de détection fonctionnant avec un bus (10) selon l'une des revendications précédentes,
**caractérisé par**
une première et une seconde sortie de bus (a1', b1') reliée à l'installation de commande (100) pour être reliée à une autre première et seconde ligne de bus (B-, B+).

7. Dispositif de détection fonctionnant avec un bus (10) selon l'une des revendications précédentes,
**caractérisé en ce que**
le contact de détection (50) est un élément de commutation notamment un commutateur à lamelles, un commutateur thermique, un commutateur à induction, un commutateur optique.

8. Dispositif de détection fonctionnant avec un bus (10) selon la revendication 6 ou 7,
**caractérisé par**
une installation d'adressage (20a ; 20b) prévue entre la seconde entrée de bus (b1) et la seconde sortie de bus (b1').

9. Procédé de contrôle d'un contact de détection (50) d'un dispositif de détection (10) fonctionnant avec un bus selon au moins l'une des revendications précédentes et comprenant les étapes suivantes :
- on coupe le dispositif de détection (10) du bus (B+, B-) ;
- on mesure la caractéristique intensité/tension sur la première et la seconde entrée de bus (a1, b1) en mode de contrôle dans lequel la première et la seconde entrée de bus (a1, b1) sont reliées à un troisième et un quatrième potentiel ayant une différence de potentiel de signe algébrique différent de celui du premier et du second potentiel, dans les différents états de contact du contact de détection (50) notamment en utilisant un multimètre ; et
- on juge de la qualité du contact de détection (50) à l'aide des résultats de mesure.

10. Procédé de contrôle selon la revendication 9,
**caractérisé en ce que**
le contact de détection (50) présente deux états de contact ouverts et fermés et pour ces états de contact on mesure la caractéristique intensité/tension sur la première et la seconde entrée de bus (a1, b1).
